(19) Europäisches Patentamt
European Patent Office
Office européen des brevets

(11) **EP 4 107 221 B1**

(12) **EUROPEAN PATENT SPECIFICATION**

(45) Date of publication and mention
of the grant of the patent:
**16.07.2025 Bulletin 2025/29**

(21) Application number: **21703435.4**

(22) Date of filing: **04.02.2021**

(51) International Patent Classification (IPC):
***C08L 23/04*** *(2006.01)*

(52) Cooperative Patent Classification (CPC):
(C-Sets available)
**C08L 23/04;** C08L 2205/035; C08L 2207/20
(Cont.)

(86) International application number:
**PCT/EP2021/052610**

(87) International publication number:
**WO 2021/165045 (26.08.2021 Gazette 2021/34)**

(54) **COMPOSITIONS OBTAINED FROM RECYCLED POLYOLEFINS**

AUS RECYCELTEN POLYOLEFINEN ERHALTENE ZUSAMMENSETZUNGEN

COMPOSITIONS OBTENUES À PARTIR DE POLYOLÉFINES RECYCLÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.02.2020 EP 20158707**

(43) Date of publication of application:
**28.12.2022 Bulletin 2022/52**

(73) Proprietor: **Basell Poliolefine Italia S.r.l.
20121 Milano (IT)**

(72) Inventors:
• **CAVALIERI, Claudio
44122 Ferrara (IT)**

• **BURGIN, Emanuele
44122 Ferrara (IT)**
• **GALVAN, Monica
44122 Ferrara (IT)**
• **BÖHM, Thomas
64291 Darmstadt (DE)**

(74) Representative: **LyondellBasell
c/o Basell Poliolefine Italia
Intellectual Property
P.le Donegani 12
44122 Ferrara (IT)**

(56) References cited:
**EP-A1- 3 165 473     WO-A1-2018/206353
WO-A1-2019/091885     WO-A1-2019/224129**

(52) Cooperative Patent Classification (CPC): (Cont.)

C-Sets
**C08L 23/04, C08L 23/14, C08L 23/12, C08L 23/142**

**Description**

FIELD OF THE INVENTION

The present disclosure relates to compositions containing recycled polypropylene that can be advantageously used for the production of blow molding articles.

BACKGROUND OF THE INVENTION

Polyolefins, in particular polypropylene, are increasingly consumed in large amounts for many applications, including packaging for food and other goods, fibers, automotive components, and a great variety of manufactured articles. However, the said massive use of polyolefins is creating a concern as regards the environmental impact of the waste materials generated after the first use.

In fact, large amounts of waste plastic materials are presently coming from differential recovery of municipal plastic wastes, mainly constituted of flexible packaging (cast film, blown film and BOPP film), rigid packaging, blow moulded bottles and injection moulded containers. Through a step of separation from other polymers, such as PVC, PET or PS, two main polyolefinic fractions are obtained, namely polyethylenes (in particular HDPE LDPE, LLDPE) and polypropylenes (homopolymers, random copolymers, heterophasic copolymers).

However due to the poor mechanical and physical feature of these recovered fraction it is difficult to reuse them in the industrial processes. In particular for processes such as blow molding that requires high mechanical properties. WO2019224129 and WO2019091885 disclose recycled polypropylene compositions for blow molding. However, WO2019224129 discloses a composition based on polypropylene post-consumer resin that his mixed with only one further polypropylene resin while WO2019091885 uses a high ethylene content ethylene-propylene copolymer with more than 70 wt% ethylene instead.

It has now been found that it is possible to use recycled polypropylene in blow molding industrial processes by compounding the recycled polypropylene with other polypropylene polymers so that to achieve the desired mechanical properties and compatibility.

SUMMARY OF THE INVENTION

The present disclosure relates to a polypropylene compositions comprising:

T1) 35-65wt%, of a recycled polypropylene mixture containing at least 80 wt% of rigid polypropylene items and having a purity of at least 90 wt% the remaining 10 wt% comprising other polymers, paper, cardboard carton aluminized plastic and textiles; the recycled polypropylene mixture having a melt flow rate (ISO 1133 230°C/2.16 kg) ranging between 2 and 30 g/10 min and a melting point measured by DSC ranging from 148°C to 162°C;

T2) 20-50 wt% of a an ethylene propylene copolymer wherein:

i) the content of ethylene derived units is comprised between 1.0 wt% and 8.0 wt%;
(ii) the melting temperature ranges from 135° C to 155° C;
(iii) the melt flow rate (230°C/5 kg.. ISO 1133) ranging from 0.2 g/10min to 3.5
(iv) the xylene solubles at 25°C ranges from 10.0 wt% to 4.0wt%;

T3) 5-20 wt% of a propylene, ethylene copolymer having the intrinsic viscosity on the xylene soluble fraction measured at 25°C ranging from 2.5 dl/g to 4.5 dl/g and comprising:

a) from 12 wt% to 52 wt% of a propylene homopolymer or a propylene/ethylene copolymer having a content of ethylene derived units ranging from 0.1 wt% to 4.5 wt%; and having a xylene soluble content measured at 25°C lower than 10 wt%;
b) from 48 wt% to 88 wt% of a propylene ethylene copolymer having a content of ethylene derived units ranging from 15 wt% to 42 wt%;

wherein the propylene composition has a melt flow rate (ISO 1133 230°C/2.16 kg) ranging from 0.5 to 20 g/10 min;
the sum of the amount of a) and b), being referred to the total weight %of a), and b) being 100 wt%.
the sum of the amount of T1), T2) and T3), being referred to the total weight %of T1), T2), and T3) being 100 wt%.

DETAILED DESCRIPTION OF THE INVENTION

The present disclosure relates to polypropylene compositions comprising:

T1) 35-65wt%; preferably from 40-60 wt%; more preferably from 45-55 wt% of a recycled polypropylene mixture containing at least 80 wt% preferably at least 85 wt% more preferably at least 90 wt% of rigid polypropylene items and having a purity of at least 90 wt%; prefererably at least 92 wt% more preferably at least 94 wt% the remaining 10 wt%; preferably 8 wt%; more preferably 6 wt% comprising: other polymers, paper, cardboard carton aluminized plastic and textiles; the recycled polypropylene mixture having a melt flow rate (ISO 1133 230°C/2.16 kg) ranging between 2 and 30 g/10 min; preferably ranging between 3 and 25 g/10 min; more preferably ranging between 5 and 20 g/10 min and a melting point measured by DSC ranging from 148°C to 162°C;

T2) 20-50 wt% preferably 25-45 wt%; more preferably 32-42 wt% of a an ethylene propylene copolymer wherein:

i) the content of ethylene derived units is comprised between 1.0 wt% and 8.0 wt%; preferably from 2.0 wt% to 6.0 wt% ; more preferably from 3.0 wt% to 5.0 wt%

(ii) the melting temperature ranges from 135° C to 155° C;

(iii) the melt flow rate (230°C/5 kg.. ISO 1133) ranging from 0.2 g/10min to 3.5 g/10min; preferably from 0.6 g/10min to 2.0 g/10min;

(iv) the xylene solubles at 25°C ranges from 10.0 wt% to 4.0wt%; preferably from 9.0 wt% to 6.0 wt%;

T3) 5-20 wt%; preferably 7-15 wt% more preferably 8-13 wt% of a propylene, ethylene copolymer having the intrinsic viscosity on the xylene soluble fraction measured at 25°C ranges from 2.5 dl/g to 4.5 dl/g; preferably from 2.8 dl/g to 4.0 dl/g.;

wherein T3 comprises

a) from 12 wt% to 52 wt%; preferably from 15 wt% to 43 wt%; more preferably from 20 wt% to 33 wt% of a propylene homopolymer or a propylene/ethylene copolymer having a content of ethylene derived units ranging from 0.1 wt% to 4.5 wt% preferably from 1.5 wt% to 4.0 wt%; and having a xylene soluble content measured at 25°C lower than 10 wt%; preferably lower than 8 wt% ; more preferably lower than 7 wt%;

b) from 48 wt% to 88 wt% preferably from 57 wt% to 85 wt%; more preferably from 67 wt% to 80 wt% of a propylene ethylene copolymer having a content of ethylene derived units ranging from 15 wt% to 42 wt%; preferably from 21.0 wt% to 35 wt%

wherein the propylene composition has a melt flow rate (ISO 1133 230°C/2.16 kg) ranging from 0.5 to 20.0 g/10 min; preferably from 1.0 to 10.0 g/10 min; more preferably from 1.3 to 5.0 g/10 min
the sum of the amount of a) and b), being referred to the total weight %of a), and b) being 100 wt%;
the sum of the amount of T1), T2) and T3), being referred to the total weight %of T1), T2), and T3) being 100 wt%.

The rigid polypropylene items of T1) are items having a volume lower or equal to 5 liters such as bottles, cups and trays including secondary components such as lids and labels.

Components T1) can be found in the market of recycled polypropylene such as grade sold by Lyondellbasell under the tradename Moplen QCP300P.

Component T2) is a polypropylene random copolymer obtained by using Ziegler Natta catalyst than can be found in the market such as Hostalen H5416 sold by Lyondellbasell.

Component T3) is propylene, ethylene copolymer composition being heterophasic obtained by sequential polymerization by using Ziegler Natta catalyst that can be found in the market such as Adflex Q100F sold by Lyondellbasell.

By using the polypropylene composition disclosed in the present disclosure it si possible to achieve blow molding articles containing recycled polypropylene having improved mechanical features. Allowing in this way to use recycled polypropylene in the production of blow molding articles.

Thus a further object of the present disclosure is blow molding articles comprising the polypropylene composition of the present disclosure.

Blow molding articles can be obtained with a processes common know in the art for this kind of articles.

Blow molding articles in particular are bottles, tanks.

The following examples are given in order to illustrate, but not limit the present disclosure.

**EXAMPLES**

**CHARACTERIZATIONS**

**Xylene-soluble (XS) Fraction at 25 °C**

Solubility in xylene: Determined as follows:

2.5 g of polymer and 250 ml of xylene are introduced in a glass flask equipped with a refrigerator and a magnetic stirrer. The temperature is raised in 30 minutes up to the boiling point of the solvent. The resulting clear solution is then kept under reflux and stirred for 30 minutes. The closed flask is then kept for 30 minutes in a bath of ice and water, then in a thermostatic water bath at 25 °C for 30 minutes. The resulting solid is filtered on quick filtering paper. 100 ml of the filtered liquid is poured in a previously weighed aluminum container, which is heated on a heating plate under nitrogen flow to remove the solvent by evaporation. The container is then kept on an oven at 80 °C under vacuum until a constant weight is obtained. The weight percentage of polymer soluble in xylene at room temperature is then calculated.

The content of the xylene-soluble fraction is expressed as a percentage of the original 2.5 grams and then, by the difference (complementary to 100%), the xylene insoluble percentage (%);

XS of components B) and C) have been calculated by using the formula:

$$XStot=WaXSA+WbXSB+WcXSC$$

wherein Wa, Wb and Wc are the relative amount of components A, B and C, respectively, and (A+B+C=1).

**Melt Flow Rate (MFR)**

Measured according to ISO 1133 at 230 °C with a load of 2.16 kg, unless otherwise specified.

**Intrinsic Viscosity (IV)**

The sample is dissolved in tetrahydronaphthalene at 135 °C and then poured into a capillary viscometer. The viscometer tube (Ubbelohde type) is surrounded by a cylindrical glass jacket; this setup allows for temperature control with a circulating thermostatic liquid. The downward passage of the meniscus is timed by a photoelectric device.

The passage of the meniscus in front of the upper lamp starts the counter which has a quartz crystal oscillator. The meniscus stops the counter as it passes the lower lamp and the efflux time is registered: this is converted into a value of intrinsic viscosity through Huggins' equation (Huggins, M.L., J. Am. Chem. Soc., 1942, 64, 2716) provided that the flow time of the pure solvent is known at the same experimental conditions (same viscometer and same temperature). One single polymer solution is used to determine [ η ].

**Ethylene (C2) content**

**$^{13}$C NMR of propylene/ethylene copolymers**

$^{13}$C NMR spectra were acquired on a Bruker AV-600 spectrometer equipped with cryoprobe, operating at 160.91 MHz in the Fourier transform mode at 120°C.

The peak of the $S_{\beta\beta}$ carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as internal reference at 29.9 ppm. The samples were dissolved in 1,1,2,2-tetrachloroethane-d2 at 120°C with a 8 % wt/v concentration. Each spectrum was acquired with a 90° pulse, 15 seconds of delay between pulses and CPD to remove 1H-13C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride-diethylaluminum chloride" M. Kakugo, Y. Naito, K. Mizunuma and T. Miyatake, Macromolecules, 1982, 15, 1150) using the following equations:

$$PPP = 100\ T_{\beta\beta}/S \qquad PPE = 100\ T_{\beta\delta}/S \qquad EPE = 100\ T_{\delta\delta}/S$$

$$PEP = 100\ S_{\beta\beta}/S \qquad PEE= 100\ S_{\beta\delta}/S \qquad EEE = 100\ (0.25\ S_{\gamma\delta}+0.5\ S_{\delta\delta})/S$$

$$S = T_{\beta\beta} + T_{\beta\delta} + T_{\delta\delta} + S_{\beta\beta} + S_{\beta\delta} + 0.25\,S_{\gamma\delta} + 0.5\,S_{\delta\delta}$$

The molar percentage of ethylene content was evaluated using the following equation:
E% mol = 100 * [PEP+PEE+EEE]The weight percentage of ethylene content was evaluated using the following equation:

$$E\% \text{ wt.} = \frac{100 * E\% \text{ mol} * MW_E}{E\% \text{ mol} * MW_{E} + P\% \text{ mol} * MW_P}$$

where P% mol is the molar percentage of propylene content, while $MW_E$ and $MW_P$ are the molecular weights of ethylene and propylene, respectively.

The product of reactivity ratio $r_1 r_2$ was calculated according to Carman (C.J. Carman, R.A. Harrington and C.E. Wilkes, Macromolecules, 1977; 10, 536) as:

$$r_1 r_2 = 1 + \left(\frac{EEE + PEE}{PEP} + 1\right) - \left(\frac{P}{E} + 1\right)\left(\frac{EEE + PEE}{PEP} + 1\right)^{0.5}$$

The tacticity of Propylene sequences was calculated as mm content from the ratio of the PPP $mmT_{\beta\beta}$ (28.90-29.65 ppm) and the whole $T_{\beta\beta}$ (29.80-28.37 ppm).

Ethylene C2 content of component b2 has been measured by measuring the C2 content on component B) and then calculated by using the formula C2tot=Xb1C2b1+Xb2C2b2 wherein Xb1 and Xb2 are the amounts of components b1 and b2 in the composition.

Charpy impact test measured according to according to ISO 179-1eA, e ISO 1873-2

Elongation at yield: measured according to ISO 527.

Elongation at break: measured according To ISO 527
Stress at break: measured according to ISO 527.
Impact test: ISO 180-1A
Samples for the mechanical analysis
Samples have been obtained according to ISO 1873-2:2007 excepting for the flexural modulus for which ISO 3167 has been used.

Flexural Modulus

Determined according to ISO 178.

Melting point a and crystallization point

The melting point has been measured by using a DSC instrument according to ISO 11357-3, at scanning rate of 20C/min both in cooling and heating, on a sample of weight between 5 and 7 mg., under inert N2 flow. Instrument calibration made with Indium.

**T1 component**

T1 component is a recycled polypropylene sold by QCP with the tradename QCP300P

T1 contains residue-drained, rigid, system-compatible items made of polypropylene, volume $\leq$ 5 litres, e.g. bottles, bottles, cups and trays, incl. secondary components such as lids, labels etc.

Purity is at least 94 wt%, metallic and mineral impurities with a unit weight of > 100 g and cartridges for sealants are not permitted!

Impurities

| | |
|---|---|
| Other metal items | < 0.5 % by mass |
| Rigid PE items | < 1 % by mass |
| Expanded plastics incl. EPS items | < 0.5 % by mass |

(continued)

| Plastic films | < 2 % by mass |
|---|---|
| Other residues | < 3 % by mass |

Examples of other residues are:

- Glass
- Paper, Board, Cardboard
- Composite paper/cardboard materials (e.g. liquid packaging boards)
- Aluminized plastics
- Other materials (e.g. rubber, stones, wood, textiles, nappies)
- Compostable waste (e.g. food, garden waste)

The Melt flow rate (230 °C/ 2.16 kg) of T1 is 16 g/10 min and the melting point is 150°C

**T2 component**

T2 component is commercial grade Hostalen H5416 sold by LyondellBasell

The properties of the copolymer have been reported in table 1:

Table 1

| MFR 5 Kg/230°C | g/10min | 1.3 |
|---|---|---|
| Ethylene derived units | wt% | 4.0 |
| Polydispersity (PI) | | 4.9 |
| X.S. | % | 8.7 |
| ISO Characterization | | |
| Flexural modulus 24h | MPa | 870 |
| Tensile modulus 24h | MPa | 850 |
| IZOD 0°C 24h | kJ/m2 | 19 |
| Stress at yield | % | 27 |
| Elongation at break | kJ/m2 | 482 |
| Tm | °C | 140 |

**T3 component**

Components T3) is an heterophasic copolymer obtained by sequential gas phase polymerization sold by Lyondellbasell under the tradename Adflex Q100F , the features of the copolymer are reported on table 2

Table 2

| Component | | B |
|---|---|---|
| Component a | | |
| Split | %wt | 32 |
| C2 | %wt | 3.2 |
| Xylene solubles at 25°C | %wt | <6.5 |
| Component b | | |
| Split | %wt | 68 |
| C2 | %wt | 27.0 |

(continued)

| Component b | | |
|---|---|---|
| intrinsic viscosity of the xylene soluble fraction at 25°C | dl/g | 3.2 |
| * C2= ethylene derived units | | |

Components T1, T2 and T3 have been blended together, the characterization of the blend is reported in table 3

Table 3

| | | Ex1 | Comp ex 2 | Comp ex 3 |
|---|---|---|---|---|
| T2 | wt% | 50 | 50 | |
| T1 | wt% | 40 | 50 | |
| T3 | wt% | 10 | | |
| MFR | g/10min | 2,9 | 2.7 | 1,8 |
| Charpy 23°C 48h | KJ/M2 | 46 | 12.3 | 34 |
| Charpy 0°C 48h | KJ/M2 | 5.9 | 3.5 | 5 |
| | | | | |
| Tm | deg_C | 155,2 | 155.9 | 143 |
| Tc | deg_C | 121,8 | 122.5 | 108 |
| **1l bottles** | | | | |
| Drop tests | m (J) | 4.5 (47.7) | 1.7 (18) | 4.0 (41.1) |

Comparative example 3 is RB307MO a propylene ethylene random copolymer sold by Borealis

The composition of example 1 shows improved value of charpy impact on samples and drop tests on bottle.

1 liter Bottles with a weight of 30 grams have been produced on a Krupp-Kautex KEB 4 single head machine using a one cavity bottle mould with the following conditions:

Melt temperature 190°C; mould temperature 12°C; screw speed, rpm 18; die gap 650; cycle time, sec 13.5; air pressure, bar 6.5; water pressure, bar 3.

Drop test was measured on the sample bottles filled with water ⅞ full. After conditioning for 2 hours at the temperature of the test (23° C) the bottles were left falling from increasing height The parameter reported in table 2 is the height at which 50% of the bottles breaks and the energy (20 bottles have been tested for each grade).

## Claims

1. A polypropylene compositions comprising:

T1) 35-65wt%, of a recycled polypropylene mixture containing at least 80 wt% of polypropylene items and having a purity of at least 90 wt% the remaining 10 wt% comprising other polymers, paper, cardboard carton aluminized plastic and textiles; the recycled polypropylene mixture having a melt flow rate (ISO 1133 230°C/2.16 kg) ranging between 2 and 30 g/10 min and a melting point measured by DSC ranging from 148°C to 162°C;

T2) 20-50 wt% of an ethylene propylene copolymer wherein:

i) the content of ethylene derived units is comprised between 1.0 wt% and 8.0 wt%;
(ii) the melting temperature ranges from 135° C to 155° C;
(iii) the melt flow rate (ISO 1133 230°C/5 kg.. ISO 1133) ranging from 0.2 g/10min to 3.5
(iv) the xylene solubles at 25°C ranges from 10.0 wt% to 4.0wt%;

T3) 5-20 wt% of a propylene, ethylene heterophasic copolymer composition having the intrinsic viscosity on the xylene soluble fraction measured at 25°C ranges from 2.5 dl/g to 4.5 dl/g; comprising:

a) from 12 wt% to 52 wt% of a propylene homopolymer or a propylene/ethylene copolymer having a content of ethylene derived units ranging from 0.1 wt% to 4.5 wt%; and having a xylene soluble content measured at 25°C lower than 10 wt%;

b) from 48 wt% to 88 wt% of a propylene ethylene copolymer having a content of ethylene derived units ranging from 15 wt% to 42 wt%;

wherein the propylene composition has a melt flow rate (ISO 1133 230°C/2.16 kg) ranging from 0.5 to 20 g/10 min; the sum of the amount of a) and b), being referred to the total weight % of a), and b) being 100 wt%. the sum of the amount of T1), T2) and T3), being referred to the total weight % of T1), T2), and T3) being 100 wt%.

2. The polypropylene compositions according to claim 1 wherein:

component T1 ranges from 40 % by weight to 60 % by weight;
component T2 ranges from 25 % by weight to 45 % by weight;
component T3 ranges from 7 % by weight to 15 % by weight;

3. The polypropylene compositions according to claims 1 or 2 wherein

Component T1 ranges from 45 % by weight to 55 % by weight;
Component T2 ranges from 32 % by weight to 42 % by weight; and
Component T3 ranges from 8 % by weight to 13 % by weight.

4. The polypropylene compositions according to anyone of claims 1-3 wherein component T1 contains at least 85 wt% of rigid polypropylene items and having a purity of at least 92 wt% the remaining 8 wt% comprising: other polymers, paper, cardboard carton aluminized plastic and textiles;.

5. The polypropylene compositions according to anyone of claims 1-4 wherein in component T1 contains at least 90 wt% of rigid polypropylene items and having a purity of at least 94 wt% the remaining 6 wt% comprising: other polymers, paper, cardboard carton aluminized plastic and textiles.

6. The polypropylene compositions according to anyone of claims 1-5 wherein component T2 is a copolymer of ethylene and propylene containing from 2.0% to 6.0% by weight of ethylene units.

7. The polypropylene compositions according to anyone of claims 1-6 wherein component T2 is a copolymer of ethylene and propylene containing from 3.0% to 5.0% by weight of ethylene units.;

8. The polypropylene compositions according to anyone of claims 1-7 wherein in component T2 the xylene solubles at 25°C ranges from 9.0 wt% to 6.0 wt%.

9. The polypropylene compositions according to anyone of claims 1-8 wherein component T2 has a melt flow rate (230°C/5 kg.. ISO 1133) comprised between 0.6 to 2.0 g/10m;

10. The polypropylene compositions according to anyone of claims 1-9 wherein in component T3 component a) ranges from 15 wt% to 43 wt% and component b) ranges from 57 wt % to 85 wt%.

11. The polypropylene compositions according to anyone of claims 1- 10 wherein in component T3) component a) is a propylene ethylene copolymer having an ethylene content ranging from 1.5 wt% to 4.0 wt%.

12. The polypropylene compositions according to anyone of claims 1-11 wherein in component T3) component b) has ethylene derived units content content ranging from 21.0 wt% to 35.0 wt%..

13. The polypropylene compositions according to anyone of claims 1-12 having a melt flow rate (ISO 1133 230°C/2.16 kg) ranging from 1.0 to 10.0 g/10 min.

14. A blow molding article comprising the polypropylene compositions of claims 1-13.

15. A bottle according to claim 14.

**Patentansprüche**

1. Polypropylenzusammensetzungen, umfassend:

   T1) 35 bis 65 Gew.% einer recycelten Polypropylenmischung, die mindestens 80 Gew.% Polypropylenteile enthält und eine Reinheit von mindestens 90 Gew.% hat, wobei die verbleibenden 10 Gew.% andere Polymere, Papier, Pappkarton, aluminisierter Kunststoff und Textilien umfassen; wobei die recycelte Polypropylenmischung eine Schmelzflussrate (ISO 1133, 230 °C/2,16 kg) im Bereich zwischen 2 und 30 g/10 min und einen mittels DSC gemessenen Schmelzpunkt im Bereich von 148 °C bis 162 °C aufweist;

   T2) 20 bis 50 Gew.% eines Ethylen-Propylen-Copolymers, wobei:

   (i) der Gehalt an von Ethylen abgeleiteten Einheiten zwischen 1,0 Gew.% und 8,0 Gew.% liegt;
   (ii) die Schmelztemperatur im Bereich von 135 °C bis 155 °C liegt;
   (iii) die Schmelzflussrate (ISO 1133, 230 °C/5 kg, ISO 1133) im Bereich von 0,2 g/10min bis 3,5 liegt,
   (iv) die in Xylol bei 25 °C löslichen Materialien im Bereich von 10,0 Gew.% bis 4,0 Gew.% liegen;

   T3) 5 bis 20 Gew.% einer heterophasischen Propylen-Ethylen-Copolymerzusammensetzung mit einer Grenzviskosität der in Xylol löslichen Fraktion, gemessen bei 25 °C, im Bereich von 2,5 dl/g bis 4,5 dl/g; umfassend:

   a) 12 Gew.% bis 52 Gew.% eines Propylenhomopolymers oder eines Propylen/Ethylen-Copolymers mit einem Gehalt an von Ethylen abgeleiteten Einheiten im Bereich von 0,1 Gew.% bis 4,5 Gew.%; und mit einem Gehalt an in Xylol löslichen Materialien, gemessen bei 25 °C, von weniger als 10 Gew.%;
   b) 48 Gew.% bis 88 Gew.% eines Propylen/Ethylen-Copolymers mit einem Gehalt an von Ethylen abgeleiteten Einheiten im Bereich von 15 Gew.% bis 42 Gew.%;
   wobei die Propylenzusammensetzung eine Schmelzflussrate (ISO 1133, 230 °C/2,16 kg) im Bereich von 0,5 bis 20 g/10 min hat;

   die Summe der Menge von a) und b), die als die Gesamtgewichtsprozente von a) und b) bezeichnet wird, 100 Gew.% beträgt;
   die Summe der Menge von T1), T2) und T3), die als die Gesamtgewichtsprozente von T1), T2) und T3) bezeichnet wird, 100 Gew.% beträgt.

2. Polypropylenzusammensetzungen nach Anspruch 1, wobei:

   Komponente T1 im Bereich von 40 Gew.% bis 60 Gew.% liegt;
   Komponente T2 im Bereich von 25 Gew.% bis 45 Gew.% liegt;
   Komponente T3 im Bereich von 7 Gew.% bis 15 Gew.% liegt.

3. Polypropylenzusammensetzungen nach Anspruch 1 oder 2, wobei

   Komponente T1 im Bereich von 45 Gew.% bis 55 Gew.% liegt;
   Komponente T2 im Bereich von 32 Gew.% bis 42 Gew.% liegt; und
   Komponente T3 im Bereich von 8 Gew.% bis 13 Gew.% liegt.

4. Polypropylenzusammensetzungen nach einem der Ansprüche 1 bis 3, wobei Komponente T1 mindestens 85 Gew.% starre Polypropylenteile enthält und eine Reinheit von mindestens 92 Gew.% hat, wobei die verbleibenden 8 Gew.% andere Polymere, Papier, Pappkarton, aluminisierten Kunststoff und Textilien umfassen.

5. Polypropylenzusammensetzungen nach einem der Ansprüche 1 bis 4, wobei Komponente T1 mindestens 90 Gew.% starre Polypropylenteile enthält und eine Reinheit von mindestens 94 Gew.% hat, wobei die verbleibenden 6 Gew.% andere Polymere, Papier, Pappkarton, aluminisierten Kunststoff und Textilien umfassen.

6. Polypropylenzusammensetzungen nach einem der Ansprüche 1 bis 5, wobei Komponente T2 ein Copolymer von Ethylen und Propylen ist, das 2,0 Gew.% bis 6,0 Gew.% Ethyleneinheiten enthält.

7. Polypropylenzusammensetzungen nach einem der Ansprüche 1 bis 6, wobei Komponente T2 ein Copolymer von Ethylen und Propylen ist, das 3,0 Gew.% bis 5,0 Gew.% Ethyleneinheiten umfasst.

**8.** Polypropylenzusammensetzungen nach einem der Ansprüche 1 bis 7, wobei in Komponente T2 die in Xylol bei 25 °C löslichen Materialien im Bereich von 9,0 Gew.% bis 6,0 Gew.% liegen.

**9.** Polypropylenzusammensetzungen nach einem der Ansprüche 1 bis 8, wobei Komponente T2 eine Schmelzflussrate (230 °C/5 kg, ISO 1133) aufweist, die zwischen 0,6 und 2,0 g/10min liegt.

**10.** Polypropylenzusammensetzungen nach einem der Ansprüche 1 bis 9, wobei in Komponente T3 Komponente a) im Bereich von 15 Gew.% bis 43 Gew.% liegt und Komponente b) im Bereich von 57 Gew.% bis 85 Gew.% liegt.

**11.** Polypropylenzusammensetzungen nach einem der Ansprüche 1 bis 10, wobei in Komponente T3) Komponente a) ein Propylen-Ethylen-Copolymer mit einem Ethylengehalt im Bereich von 1,5 Gew.% bis 4,0 Gew.% ist.

**12.** Polypropylenzusammensetzungen nach einem der Ansprüche 1 bis 11, wobei in Komponente T3) Komponente b) einen Gehalt an von Ethylen abgeleiteten Einheiten im Bereich von 21,0 Gew.% bis 35,0 Gew.% aufweist.

**13.** Polypropylenzusammensetzungen nach einem der Ansprüche 1 bis 12 mit einer Schmelzflussrate (ISO 1133, 230 °C/2,16 kg) im Bereich von 1,0 bis 10,0 g/10 min.

**14.** Blasformartikel, umfassend die Polypropylenzusammensetzungen nach den Ansprüchen 1 bis 13.

**15.** Flasche nach Anspruch 14.


**Revendications**

**1.** Compositions de polypropylène comprenant :

T1) 35 à 65 % en poids d'un mélange de polypropylène recyclé contenant au moins 80 % en poids d'articles en polypropylène et présentant une pureté d'au moins 90 % en poids, les 10 % en poids restants comprenant d'autres polymères, du papier, des cartonnages, du plastique aluminisé et des textiles ; le mélange de polypropylène recyclé présentant un indice de fluidité à chaud (ISO 1133 230 °C/2,16 kg) situé dans la plage de 2 à 30 g/10 min et un point de fusion mesuré par DSC situé dans la plage de 148 °C à 162 °C ;
T2) 20 à 50 % en poids d'un copolymère d'éthylène-propylène, dans lequel :

i) la teneur en motifs dérivés de l'éthylène est située entre 1,0 % en poids et 8,0 % en poids ;
(ii) la température de fusion est située dans la plage de 135 °C à 155 °C ;
(iii) l'indice de fluidité à chaud (ISO 1133 230 °C/5 kg, ISO 1133) est situé dans la plage de 0,2 à 3,5 g/10 min,
(iv) les solubles dans le xylène à 25 °C représentent 10,0 % en poids à 4,0 % en poids ;

T3) 5 à 20 % en poids d'une composition de copolymère hétérophasique de propylène et d'éthylène présentant une viscosité intrinsèque sur la fraction soluble dans le xylène mesurée à 25 °C située dans la plage de 2,5 dl/g à 4,5 dl/g ; comprenant :

a) 12 % en poids à 52 % en poids d'un homopolymère de propylène ou d'un copolymère de propylène/éthylène présentant une teneur en motifs dérivés de l'éthylène située dans la plage de 0,1 % en poids à 4,5 % en poids ; et présentant une teneur soluble dans le xylène mesurée à 25 °C inférieure à 10 % en poids ;
b) 48 % en poids à 88 % en poids d'un copolymère de propylène-éthylène présentant une teneur en motifs dérivés de l'éthylène située dans la plage de 15 % en poids à 42 % ;
la composition de propylène présentant un indice de fluidité à chaud (ISO 1133 230 °C/2,16 kg) situé dans la plage de 0,5 à 20 g/10 min ;

la somme de la quantité de a) et b), se rapportant au pourcentage en poids total de a) et b), valant 100 % en poids, la somme de la quantité de T1), T2) et T3), se rapportant au pourcentage en poids total de T1), T2) et T3), valant 100 % en poids.

**2.** Compositions de polypropylène selon la revendication 1, dans lesquelles :

le constituant T1 représente 40 % en poids à 60 % en poids ;

le constituant T2 représente 25 % en poids à 45 % en poids ;
le constituant T3 représente 7 % en poids à 15 % en poids.

3. Compositions de polypropylène selon les revendications 1 ou 2, dans lesquelles :

le constituant T1 représente 45 % en poids à 55 % en poids ;
le constituant T2 représente 32 % en poids à 42 % en poids ; et
le constituant T3 représente 8 % en poids à 13 % en poids.

4. Compositions de polypropylène selon l'une quelconque des revendications 1 à 3, dans lesquelles le constituant T1 contient au moins 85 % en poids d'articles de polypropylène rigides et présente une pureté d'au moins 92 % en poids, les 8 % en poids restants comprenant : d'autres polymères, du papier, des cartonnages, du plastique aluminisé et des textiles.

5. Compositions de polypropylène selon l'une quelconque des revendications 1 à 4, dans lesquelles le constituant T1 contient au moins 90 % en poids d'articles de polypropylène rigides et présente une pureté d'au moins 94 % en poids, les 6 % en poids restants comprenant : d'autres polymères, du papier, des cartonnages, du plastique aluminisé et des textiles.

6. Compositions de polypropylène selon l'une quelconque des revendications 1 à 5, dans lesquelles le constituant T2 est un copolymère d'éthylène et de propylène contenant 2,0 % à 6,0 % en poids de motifs d'éthylène.

7. Compositions de polypropylène selon l'une quelconque des revendications 1 à 6, lesquelles le constituant T2 est un copolymère d'éthylène et de propylène contenant 3,0 % à 5,0 % en poids de motifs d'éthylène.

8. Compositions de polypropylène selon l'une quelconque des revendications 1 à 7, dans lesquelles, dans le constituant T2, les solubles dans le xylène à 25 °C représentent 9,0 % en poids à 6,0 % en poids.

9. Compositions de polypropylène selon l'une quelconque des revendications 1 à 8, dans lesquelles le constituant T2 présente un indice de fluidité à chaud (ISO 1133 230 °C/5 kg) situé entre 0,6 et 2,0 g/10 min.

10. Compositions de polypropylène selon l'une quelconque des revendications 1 à 9, dans lesquelles, dans le constituant T3, le constituant a) représente 15 % en poids à 43 % en poids et le constituant b) représente 57 % en poids à 85 % en poids.

11. Compositions de polypropylène selon l'une quelconque des revendications 1 à 10, dans lesquelles, dans le constituant T3), le constituant a) est un copolymère de propylène-éthylène présentant une teneur en éthylène située dans la plage de 1,5 % en poids à 4,0 % en poids.

12. Compositions de polypropylène selon l'une quelconque des revendications 1 à 11, dans lesquelles, dans le constituant T3), le constituant b) présente une teneur en motifs dérivés de l'éthylène située dans la plage de 21,0 % en poids à 35,0 % en poids.

13. Compositions de polypropylène selon l'une quelconque des revendications 1 à 12 présentant un indice de fluidité à chaud (ISO 1133, 230 °C/2,16 kg) situé dans la plage de 1,0 à 10,0 g/10 min.

14. Article de moulage par soufflage comprenant les compositions de polypropylène selon les revendications 1 à 13.

15. Bouteille selon la revendication 14.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2019224129 A

- WO 2019091885 A

### Non-patent literature cited in the description

- **HUGGINS, M.L**. *J. Am. Chem. Soc*, 1942, vol. 64, 2716
- **C. J. CARMAN** ; **R. A. HARRINGTON** ; **C. E. WILKES**. Monomer Sequence Distribution in Ethylene-Propylene Rubber Measured by 13C NMR. 3. Use of Reaction Probability Mode. *Macromolecules*, 1977, vol. 10, 536

- **M. KAKUGO** ; **Y. NAITO** ; **K. MIZUNUMA** ; **T. MIYATAKE**. Carbon-13 NMR determination of monomer sequence distribution in ethylene-propylene copolymers prepared with $\delta$-titanium trichloride-diethylaluminum chloride. *Macromolecules*, 1982, vol. 15, 1150
- **C.J. CARMAN** ; **R.A. HARRINGTON** ; **C.E. WILKES**. *Macromolecules*, 1977, vol. 10, 536